(19) Europäisches Patentamt
European Patent Office
Office européen des brevets

(11) EP 3 349 091 A1

(12) EUROPEAN PATENT APPLICATION
published in accordance with Art. 153(4) EPC

(43) Date of publication:
18.07.2018 Bulletin 2018/29

(51) Int Cl.:
G05F 1/66 (2006.01)     H02M 7/48 (2007.01)

(21) Application number: 16844061.8

(22) Date of filing: 25.07.2016

(86) International application number:
PCT/JP2016/071666

(87) International publication number:
WO 2017/043197 (16.03.2017 Gazette 2017/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 09.09.2015 JP 2015177151

(71) Applicant: Hitachi Industrial Equipment Systems
Co., Ltd.
Chiyoda-ku
Tokyo 101-0022 (JP)

(72) Inventors:
• MASUYAMA, Shiori
Tokyo 101-0022 (JP)
• MATSUNAGA, Shunsuke
Tokyo 101-0022 (JP)
• KOSAKA, Tadayoshi
Tokyo 100-8280 (JP)

(74) Representative: MERH-IP Matias Erny Reichl
Hoffmann
Patentanwälte PartG mbB
Paul-Heyse-Strasse 29
80336 München (DE)

(54) POWER CONDITIONER AND METHOD FOR CONTROLLING POWER CONDITIONER

(57) In order for a power conditioner to start up appropriately, additional components external to the power conditioner, such as an AC load circuit and a circuit switching device, are required for startup determination. Furthermore, a discharge resistor must be provided separately for a DC unit. To solve these problems, this power conditioner is equipped with: a main circuit unit, which is equipped with an inverter unit that converts DC power from a solar cell to AC power; and a startup determination processing unit, which is equipped with a switching pulse generation unit that sends a switching command to the inverter unit of the main circuit unit, and a comparison unit that compares a predetermined minimum possible operating voltage value and the DC voltage value when power is consumed by the inverter unit on the basis of the switching command transmitted by the switching pulse generation unit.

FIG. 1

**Description**

TECHNICAL FIELD

The present invention relates to a power conditioner and a method for controlling the power conditioner.

BACKGROUND ART

As a background art of this technical field, JP 2012-205328 A (Patent Document 1) is known in the art. This publication discloses a "grid interconnection device in which a load or a switch circuit with a low breakdown voltage can be used where electric power is supplied to the load or the switch circuit when determining whether a solar cell can supply the electric power which is enough for performing interconnected operation." In addition, JP 3762036 B2 (Patent Document 2) is known in the art. This publication discloses a technique of "stably operating a power conditioner even when the output characteristic of a solar cell is changed."

CITATION LIST

PATENT DOCUMENT

Patent Document 1: JP 2012-205328 A
Patent Document 2: JP 3762036 B2

SUMMARY OF THE INVENTION

PROBLEMS TO BE SOLVED BY THE INVENTION

In a photovoltaic power generation system, a power conditioner converts DC power output from a solar cell into AC power interconnected with a power grid system at the time of system activation and supplies the AC power to the power grid system.

The power conditioner is activated when the output power of the solar cell is higher than the power necessary to activate the power conditioner. In addition, the power conditioner stops when the output power of the solar cell is reduced and becomes lower than the power necessary to activate the power conditioner.

In this activation of the power conditioner, before an interconnected operation of the power grid system, typically, obtained information is only an open circuit voltage of the solar cell (DC voltage when no current flows). For this reason, considering a characteristic of the solar cell having an open circuit voltage that changes depending on a temperature, it is difficult to clearly check whether or not the output power of the solar cell is higher than the power necessary to activate the power conditioner on the basis of the open circuit voltage. For this reason, if the output power of the solar cell is insufficient, the power conditioner consumes the output power of the solar cell along with the activation of the power conditioner, so that the reduced DC voltage fails to satisfy an operation condition of the power conditioner. Therefore, the power conditioner stops. At this time, a grid interconnection relay (hereinafter, referred to as "MC") which is closed in interconnection with the power grid system is unnecessarily opened or closed. If such an unnecessary open/close operation of the MC occurs, a service lifetime of the MC may be reduced, or noise may occur. Therefore, it is desirable to avoid such an unnecessary operation.

Patent Document 1 discloses a means for determining whether or not the solar cell outputs power necessary to operate the power conditioner by allowing an AC load circuit provided in the outside of the power conditioner to consume the power. In addition, Patent Document 2 discloses a means for determining whether or not the solar cell outputs power necessary to operate the power conditioner by allowing a discharge resistor of a discharge circuit additionally provided in the power conditioner to consume the power.

However, in the technique of Patent Document 1, it is necessary to provide additional parts such as an AC load circuit for determining activation or a circuit switching device in the outside of the power conditioner. In addition, in the technique of Patent Document 2, a discharge resistor is separately necessary in a DC part.

In this regard, an object of the present invention is to provide a power conditioner and a method for controlling the power conditioner capable of determining whether or not a solar cell outputs power necessary to operate the power conditioner to avoid repeated activation/inactivation of the power conditioner with high reliability and lower cost.

SOLUTIONS TO PROBLEMS

In order to achieve the aforementioned object, for example, the invention employs configurations described in the attached claims.

According to an aspect of the invention, there is provided a power conditioner including: a main circuit unit provided with an inverter unit configured to convert DC power from a solar cell into AC power; and an activation determination processing unit provided with a switching pulse generation unit configured to transmit a switching command to the inverter unit of the main circuit unit and a comparison unit configured to compare a DC voltage value during consumption of power in the inverter unit with a predetermined minimum operable voltage value on the basis of the switching command transmitted from the switching pulse generation unit.

ADVANTAGEOUS EFFECTS OF THE INVENTION

According to the present invention, it is possible to provide a power conditioner and a method for controlling the power conditioner with high reliability and lower cost.

Other problems, configurations, and effects than those described above will become apparent by reading the following embodiments.

BRIEF DESCRIPTION OF THE DRAWINGS

Fig. 1 is an exemplary block diagram illustrating a power conditioner according to a first embodiment.
Fig. 2 is an exemplary flowchart illustrating a process of an activation determination processing unit 150.
Fig. 3 is an exemplary graph illustrating a P-V curve for comparing a case where generated energy is low and a case where generated energy is high.
Fig. 4 is an exemplary graph illustrating a P-V curve for describing a determination criterion of a comparative computation unit 152.
Fig. 5 is an exemplary graph illustrating a relationship between effective power (P) and frequency (f).
Fig. 6 is an exemplary diagram illustrating an operation performed by a switching pulse generation unit 160.
Fig. 7 is an exemplary diagram illustrating an operation performed by the switching pulse generation unit 160.
Fig. 8 is an exemplary block diagram illustrating a power conditioner according to the second embodiment.
Fig. 9 is an exemplary flowchart illustrating a process of an activation determination processing unit 250.
Fig. 10 is an exemplary graph illustrating a P-V curve when power is consumed in the power conditioner.
Fig. 11 is an exemplary block diagram illustrating a power conditioner according to a third embodiment.
Fig. 12 is an exemplary flowchart illustrating a process of an activation determination processing unit 350.
Fig. 13 is an exemplary graph illustrating a P-V curve of a solar cell under a certain condition.
Fig. 14 is an exemplary graph illustrating an I-V curve of a solar cell under a certain condition.

DESCRIPTION OF EMBODIMENTS

Embodiments will now be described with reference to the accompanying drawings.

First Embodiment

In this embodiment, a method of determining whether or not a solar cell can generate minimum power necessary to operate a power conditioner (hereinafter, referred to as "minimum operable power") by allowing an AC load provided in the power conditioner to consume power before an interconnected operation will be described.

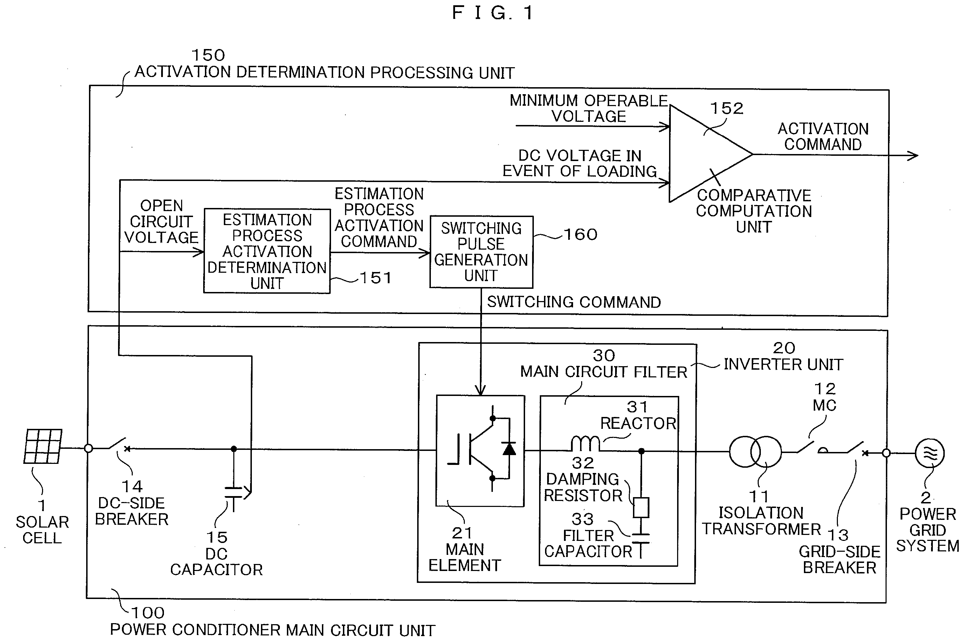

Fig. 1 is an exemplary block diagram illustrating a power conditioner according to the first embodiment.

The power conditioner according to the first embodiment includes a power conditioner main circuit unit 100 and an activation determination processing unit 150. A solar cell 1 and a power grid system 2 are connected to the power conditioner main circuit unit 100.

The power conditioner main circuit unit 100 includes an isolation transformer 11, an MC 12, a grid-side breaker 13, a DC-side breaker 14, a DC capacitor 15, and an inverter unit 20. The inverter unit 20 has a main element 21 and a main circuit filter 30, and the main circuit filter 30 has a reactor 31, a damping resistor 32, and a filter capacitor 33.

The activation determination processing unit 150 has an estimation process activation determination unit 151, a comparative computation unit 152, and a switching pulse generation unit 160.

The solar cell 1 outputs the generated DC power to the power conditioner main circuit unit 100. The power grid system 2 transmits the AC power to the power conditioner main circuit unit 100. The isolation transformer 11 is a transformer provided between the inverter unit 20 and the power grid system 2 to isolate the inverter unit 20 from the power grid system 2. The MC 12 is activated to interconnect the inverter unit 20 and the power grid system 2 via the grid-side breaker 13. The grid-side breaker 13 is a breaker activated to connect the power grid system 2 and the power conditioner main circuit unit 100 to each other and is also used to protect the AC side. The DC-side breaker 14 is a breaker activated to connect the solar cell 1 and the power conditioner main circuit unit 100 to each other and is also used to protect the DC side. The DC capacitor 15 is a capacitor provided in the DC side of the power conditioner main circuit unit 100 and performs smoothing of a DC voltage. In addition, the DC voltage output from the solar cell 1 can be measured by monitoring the DC capacitor.

The main element 21 receives a switching command from a switching pulse generation unit 160, converts the DC power output from the solar cell 1 into AC power, and outputs it to the main circuit filter 30. The main circuit filter 30 removes harmonic waves from the AC current output from the main element 21. The output power is output to the power grid system 2 via the isolation transformer 11, the MC 12, and the grid-side breaker 13. The reactor 31, the damping resistor 32, and the filter capacitor 33 are components for suppressing harmonic waves of the AC power and are embedded in the main circuit filter 30. When the main element 21 performs switching, the power is consumed by the damping resistor 32 as described below.

The estimation process activation determination unit 151 monitors an open circuit voltage of the DC capacitor 15 (DC voltage when no current flows) and determines whether or not an estimation process is activated. If it is determined that the estimation process can be activated, the estimation process activation determination unit 151 outputs an estimation process activation command to the switching pulse generation unit 160.

When the estimation process activation command is received from the estimation process activation determination unit 151, the switching pulse generation unit 160 outputs a switching command to the main element 21. This will be described below in more details.

The comparative computation unit 152 compares a DC voltage of the DC capacitor 15 during power consumption of the damping resistor 32 (hereinafter, referred to as a DC voltage in the event of loading) and a minimum operable voltage. If the DC voltage in the event of loading is higher than the minimum operable voltage, it is determined that activation is possible, and an activation command is output.

The minimum operable voltage is a minimum value of the DC voltage necessary to convert DC power into AC power. In order to convert DC power into AC power, an AC voltage value to be converted can be adjusted by changing a modulation factor. However, since the AC voltage of the power grid system 2 is defined, there is a minimum value in the DC voltage necessary in the conversion. This minimum value of the DC voltage is the minimum operable voltage. The minimum operable voltage is a value defined in advance, for example, in a factory.

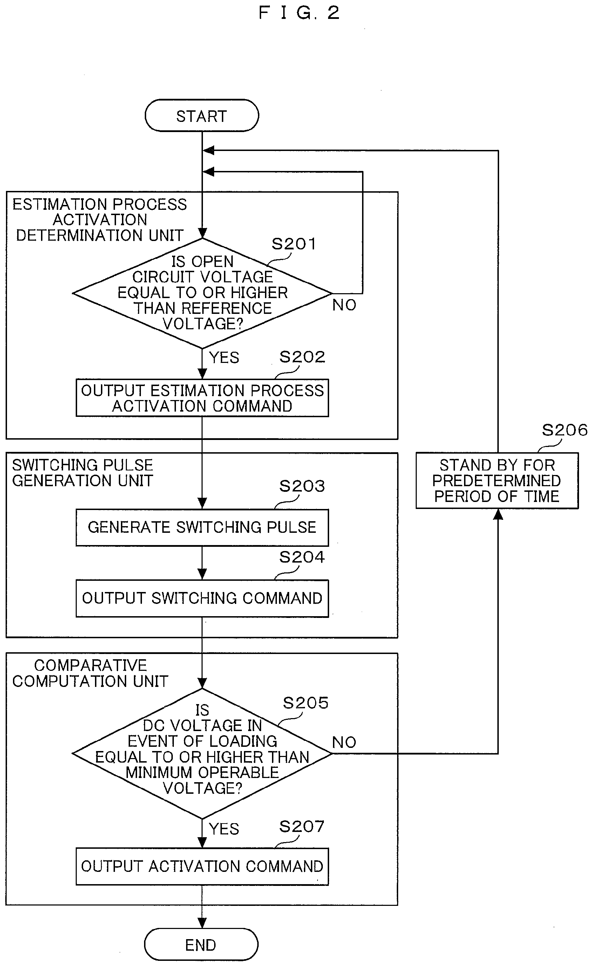

Fig. 2 is an exemplary flowchart illustrating a process of the activation determination processing unit 150. A process of the activation determination processing unit 150 will be described with reference to Fig. 2.

First, the estimation process activation determination unit 151 compares the open circuit voltage of the DC capacitor 15 with a reference voltage set in advance (S201). If the open circuit voltage is higher than the reference voltage, the estimation process activation command is output (S202). In this case, a condition that the power grid system 2 has a recovery state may be added on the basis of a grid interconnection regulation or the like. In addition, an operation command may be added as a condition for safety purposes.

As the estimation process activation command is received from the estimation process activation determination unit 151, the switching pulse generation unit 160 generates a switching pulse for switching the main element 21 (S203) and outputs the switching command to the main element 21 (S204).

As the main element 21 performs switching, the DC power generated by the solar cell 1 is converted into AC power. The converted AC power is consumed by the damping resistor 32 of the main circuit filter 30.

In this case, it is assumed that the consumed power of the damping resistor 32 is adjusted such that a total sum of power consumed by the inside of the power conditioner exceeds the minimum operable power. The minimum operable power is power necessary to operate the power conditioner at minimum and becomes a switching loss under a no-load state of the main element 21, or a total sum of power consumed by a cooling fan, various circuits, and the like. For example, if the main element 21 performs switching, the cooling fan stops, and various circuits are powered on as an operation state during the activation determination process, the power consumed by the damping resistor 32 becomes a sum of the power consumed to operate the cooling fan and power consumed additionally by starting other operations. The method for adjusting the power consumed by the damping resistor 32 will be described below.

The comparative computation unit 152 compares the DC voltage in the event of loading with the minimum operable voltage (S205). If the DC voltage in the event of loading is higher than the minimum operable voltage, the generated power of the solar cell 1 exceeds the minimum operable power for the reason described below. Therefore, if the DC voltage in the event of loading is lower than the minimum operable voltage, it is determined that the operation is not possible, and the output of the switching command stops, and the process stands by for a certain period of time (S206). Then, the determination process is performed again from the start of the activation determination processing unit 150.

Otherwise, if the DC voltage in the event of loading is higher than the minimum operable voltage, it is determined that the operation is possible, and the comparative computation unit 152 outputs an activation command (S207).

In this manner, whether or not the operation can be performed is determined after comparing the generated power of the solar cell 1 with the minimum operable power. Therefore, it is possible to avoid repeated activation/inactivation of the power conditioner.

A basis of the determination criterion for allowing the comparative computation unit 152 to output an activation command will now be described.

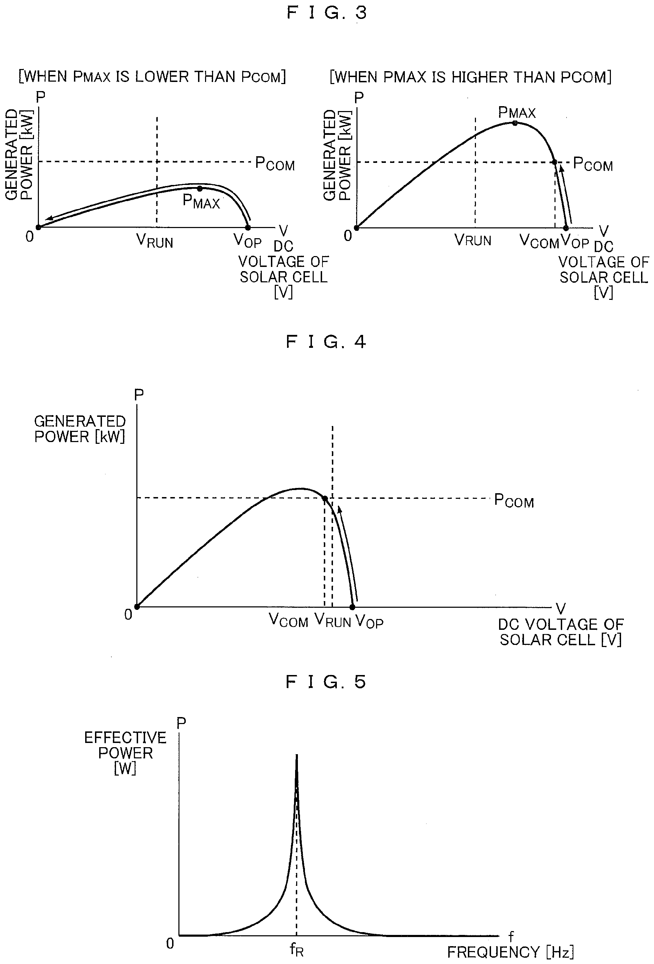

Fig. 3 is an exemplary graph illustrating a P-V curve representing a relationship between the output power P and the output voltage V of the solar cell 1. In Fig. 3, comparison is made between a case where the generated energy of the solar cell 1 is high, and a case where the generated energy is low.

In Fig. 3, "$V_{OP}$" denotes an open circuit voltage, "$V_{RUN}$" denotes a minimum operable voltage, "$P_{COM}$" denotes power consumed by the entire power conditioner during consumption of power in the damping resistor 32, "$V_{COM}$" denotes a voltage when the power $P_{COM}$ is consumed, and "$P_{MAX}$" denotes a point at which the power is maximized on the P-V curve.

First, an operation of the power conditioner when $P_{MAX}$ is lower than $P_{COM}$ in Fig. 3 will be described. Since the solar cell 1 does not output a DC current when the activation determination processing unit 150 starts the process, the power conditioner takes $V_{OP}$ which is the open circuit voltage. Since $V_{OP}$ is higher than $V_{RUN}$, the activation determination process starts. As the damping resistor 32 consumes power, the corresponding DC power is discharged from the solar cell. As a result, the DC voltage of the DC capacitor 15 decreases, and the DC power output from the solar cell 1 gradually increases along the P-V curve. However, since there is no voltage point where the $P_{COM}$ can be supplied, the DC power decreases to a zero point over $P_{MAX}$.

Next, an operation of the power conditioner when $P_{COM}$ is higher than $P_{MAX}$ will be described. Similar to the case described above, as the damping resistor 32 consumes power, the corresponding DC power is discharged from the solar cell. As a result, the DC voltage of the DC capacitor 15 decreases, and the DC power output from the solar cell 1 gradually increases along the P-V curve. When the DC voltage becomes $V_{COM}$, the power supplied to the DC capacitor 15 matches the discharged DC power, so that an equilibrium state is established. Therefore, at this point on the P-V curve, the operation becomes stable.

As the power is consumed, the operation point moves on the P-V curve to follow the power. Therefore, the voltage during power consumption becomes lower than the open circuit voltage. Therefore, it is necessary to check whether or not the voltage has a level necessary in the operation as described below by further comparing $V_{COM}$ and $V_{RUN}$.

A determination criterion of the comparative computation unit 152 will be described with reference to Fig. 4.

Fig. 4 is an exemplary graph illustrating a P-V curve when $V_{OP}$ has a value relatively close to $V_{RUN}$, compared to the P-V curve of Fig. 3 in which $P_{MAX}$ is higher than $P_{COM}$. Reference symbols of Fig. 4 have same meanings to those of Fig. 3. Referring to Fig. 4, $V_{OP}$ is higher than $V_{RUN}$. However, it is recognized that $V_{COM}$ becomes lower than $V_{RUN}$ as the damping resistor 32 consumes power. In this manner, as power is consumed, the operation point moves on the P-V curve to follow the corresponding power. Therefore, the voltage during power consumption becomes lower than the open circuit voltage. Therefore, the comparative computation unit 152 compares $V_{COM}$ and $V_{RUN}$ to check whether or not there is a voltage necessary in the operation.

Next, a method of consuming power in the damping resistor 32 will be described.

Formula 1 is a formula for obtaining power of an RLC circuit.

[Formula 1]

[Formula 1]

$$P = \frac{V^2 R}{2\left\{ R^2 + \left( \omega L - \frac{1}{\omega C} \right)^2 \right\}}$$

The power consumed in the damping resistor 32 by applying a sinusoidal AC voltage is obtained as expressed in Formula 1.

In Formula 1, "P" denotes effective power consumed by the damping resistor 32, "V" denotes an applied voltage (amplitude of phase voltage), "L" denotes an inductance of the reactor 31, "R" denotes a resistance value of the damping resistor 32, "C" denotes an electrostatic capacitance of the filter capacitor 33, and "$\omega$" denotes an angular velocity. If phase equivalents are used as values of L, R, and C, power per phase is calculated from Formula 1, so that it is multiplied by three and becomes a total power of three phases. If the values of L, R, and C are fixed, the effective power P becomes a function of the angular velocity $\omega$ and the applied voltage V.

Fig. 5 is an exemplary graph illustrating a relationship between the effective power P and the frequency f when the applied voltage V is constant. Here, the frequency f is obtained by dividing the angular velocity $\omega$ by $2\pi$, and "$f_R$" denotes a resonant frequency. Referring to Fig. 5, it is possible to consume arbitrary power P equal to or lower than the maximum power at the resonant frequency $f_R$ by changing the frequency.

Next, a frequency during consumption of the power P and a voltage $V_C$ between both ends of the capacitor at that time will be described. In a frequency region higher than the frequency of the connected power grid system 2, the voltage $V_C$ of the capacitor may be higher than the applied voltage V. As a result, a voltage equal to or higher than a voltage of a normal operation may be generated between both ends of the capacitor. Here, it is assumed that a frequency region lower than the resonant frequency $f_R$ including a frequency of the grid system to be interconnected. The frequency during consumption of power P is obtained by solving Formula 1 for the angular velocity $\omega$. This becomes Formula 2.

[Formula 2]

[Formula 2]

$$\omega = \frac{-k + \sqrt{k^2 + \dfrac{4L}{C}}}{2L}\ ,$$

where

$$k = \sqrt{\frac{RV^2}{2P} - R^2}$$

The voltage $V_C$ between both ends of the capacitor at this angular velocity $\omega$ is expressed in Formula 3. However, if Formula 2 is applied to the angular velocity $\omega$ of Formula 3, the voltage $V_C$ between both ends of the capacitor when the power P is consumed at the applied voltage V is obtained.

[Formula 3]

[Formula 3]

$$V_C = \frac{1}{\omega_p C} \sqrt{\frac{2P}{R}}$$

Using this formula, it is possible to adjust the voltage $V_C$ between both ends of the capacitor caused by the applied voltage V and consume power within a rated range of the capacitor.

When a PWM AC voltage subjected to PWM modulation by switching the main element 21 is applied, the voltage waveform contains a high-frequency component. Computation of power when this high-frequency component is contained will be described. First, if frequency components contained in the PWM voltage waveform in Fourier transform are obtained, power can be computed for each frequency from Formula 1. Computation can be made by integrating the power for every contained frequency. Alternatively, a relationship between the frequency and the power may be obtained by preparing an environment matching an actual output condition and measuring the power in advance.

An approximate period of time until the power of Formula 1 is actually generated by applying the voltage to the damping resistor 32 can be obtained from a time constant of an LR circuit consisting of L and R of the main circuit filter.

This time constant typically becomes equal to or shorter than approximately one second.

In practice, the DC voltage is measured after the power of Formula 1 is generated. However, typically, the measurement can be performed within a period of time equal to or shorter than the time constant. In addition, although it is conceived that an interval of the switching command output for determining an operation start is several seconds or several minutes, it is possible to determine a duty cycle of the damping resistor 32 by adjusting this interval.

If the period of time until the power of Formula 1 is generated, the period of time for performing measurement of the DC voltage, and the duty cycle of the damping resistor 32 are within a short-time rating range, it is possible to consume power at the short-time rating. The short-time rating is typically several times of a continuous rating. Therefore, even a damping resistor provided as a sinusoidal wave filter can consume power as much as the minimum operable power in many cases.

Here, a voltage of the filter capacitor 33 during power consumption of the damping resistor 32 is obtained. When the frequency during power consumption of the damping resistor 32 is set to be lower than the resonant frequency, the voltage applied to the filter capacitor 33 in the main circuit filter 30 increases. For this reason, by obtaining the voltage applied to the filter capacitor 33 in this manner, it is possible to prevent a failure of the filter capacitor 33.

Next, an operation performed by the switching pulse generation unit 160 will be described.

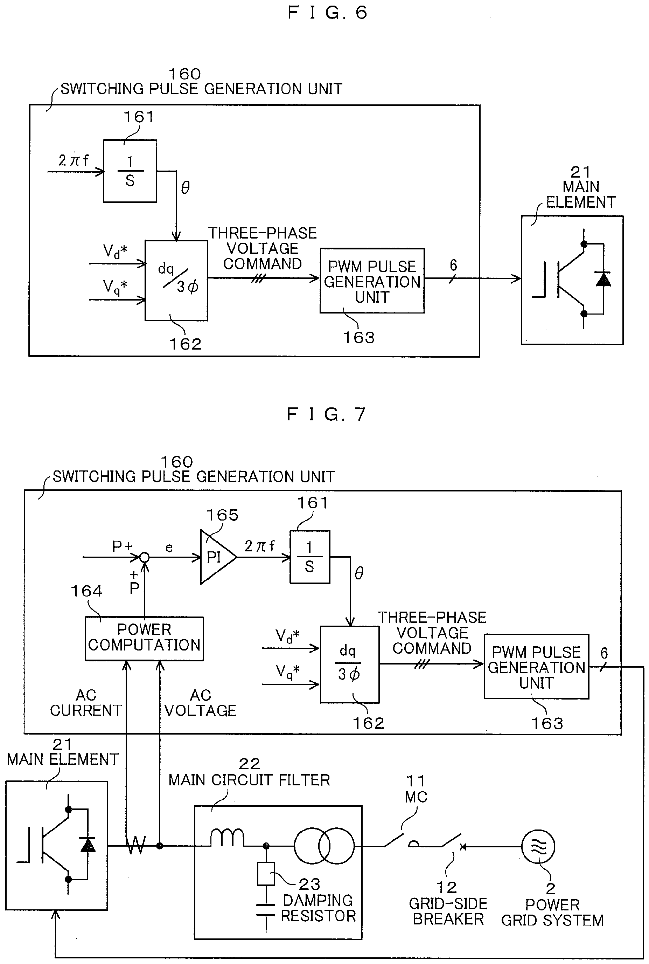

Fig. 6 is a specific example of the operation performed inside the switching pulse generation unit 160. In Fig. 6, the switching pulse generation unit 160 has an integrator 161, a converter 162, and a PWM pulse generation unit 163. As an estimation process activation command is received from the estimation process activation determination unit 151, the switching pulse generation unit 160 performs the following operation.

First, the angular velocity $2\pi f$ (where "f" denotes frequency) is input to the integrator 161, and time integration is performed to output a phase $\theta$.

Next, the phase $\theta$, a d-axis voltage command $V_d^*$, and a q-axis voltage command $V_q^*$ are input to the converter 162. Here, the voltage command $V_q^*$ is set to zero. In the converter 162, the voltages $V_d^*$ and $V_q^*$ on the d-q axes are converted into a three-phase AC voltage signal, which is then output to the PWM pulse generation unit 164. The PWM pulse generation unit 164 generates six switching pulse signals serving as PWM pulses from the three-phase AC voltage and outputs them to the main element 21 as a switching command.

The operation of the switching pulse generation unit 160 in the event of a voltage feedback process will be described.

Fig. 7 is a specific example of the operation performed inside the switching pulse generation unit 160 in the event of the voltage feedback process. In Fig. 7, the switching pulse generation unit 160 has an integrator 161, a converter 162, a PWM pulse generation unit 163, a power computation unit 164, and a frequency computation unit 165.

The switching pulse generation unit 160 has a power computation unit 164 and a frequency computation unit 165 in addition to the switching pulse generation unit 160 of Fig. 6. Configurations denoted by same reference numerals have same functions as those in Fig. 6 described above, and they will not be described repeatedly.

The power computation unit 164 computes power on the basis of the AC current and the AC voltage between the main element 21 and the main circuit filter 30. In this case, the AC voltage may be converted from the voltage command input to the converter 162. Alternatively, the current and the voltage used by the power computation unit 164 may be detected from the DC side.

The power output from the power computation unit 164 and the power consumed by the damping resistor 32 and set in advance are compared with each other, so that differential power is output. The frequency computation unit 165 multiplies the differential power output from the power computation unit 164 by a proportional coefficient and an integral coefficient and obtains a sum thereof, so that a frequency command is output.

Using the switching pulse generation unit 160 of Fig. 7, it is possible to allow the damping resistor 32 to consume desired power even when a difference in resistance between solids or a variation of the resistance caused by a temperature or the like occurs.

The present invention effectively applies even when a voltage boost chopper circuit is provided in the DC side of the power conditioner main circuit unit 100.

Although three-phase connection with the power grid system 2 is employed in the present invention, other methods such as single-phase connection may also be employed.

Second Embodiment

A second embodiment relates to a method of determining whether or not a solar cell can generate minimum power necessary in an operation of the power conditioner from a DC voltage drop around consumption of power by assuming that power is consumed using an AC load provided inside the power conditioner before an interconnected operation.

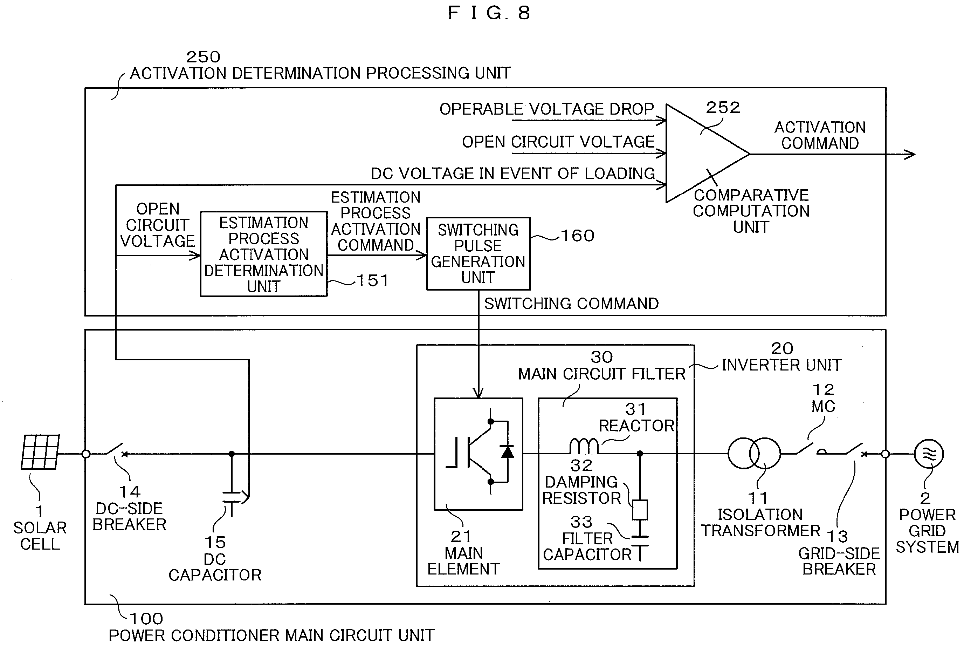

Fig. 8 is an exemplary block diagram illustrating a power conditioner according to the second embodiment.

The power conditioner according to the second embodiment has a power conditioner main circuit unit 100 and an activation determination processing unit 250, and the solar cell 1 and the power grid system 2 are connected to the power conditioner main circuit unit 100.

The power conditioner main circuit unit 100 has an isolation transformer 11, an MC 12, a grid-side breaker 13, a DC-side breaker 14, a DC capacitor 15, and an inverter unit 20. The inverter unit 20 has a main element 21 and a main circuit filter 30. The main circuit filter 30 has a reactor 31, a damping resistor 32, and a filter capacitor 33.

The activation determination processing unit 250 has an estimation process activation determination unit 151, a comparative computation unit 252, and a switching pulse generation unit 160.

The power conditioner of Fig. 8 is different from that of Fig. 1 in that the comparative computation unit 152 is substituted with the comparative computation unit 252. Other parts are similar to those of Fig. 1 as already described above, and they will not be described repeatedly.

The comparative computation unit 252 compares an open circuit voltage of the DC capacitor 15, a DC voltage of the DC capacitor 15 in the event of loading, and a predetermined operable voltage drop. If a difference between the open circuit voltage and the DC voltage in the event of loading (hereinafter, referred to as a DC voltage drop) is smaller than the operable voltage drop, an activation command is output.

The operable voltage drop refers to a ratio of the voltage calculated on the basis of an arbitrary fixed voltage or the open circuit voltage and used in comparison of the condition for outputting the activation command.

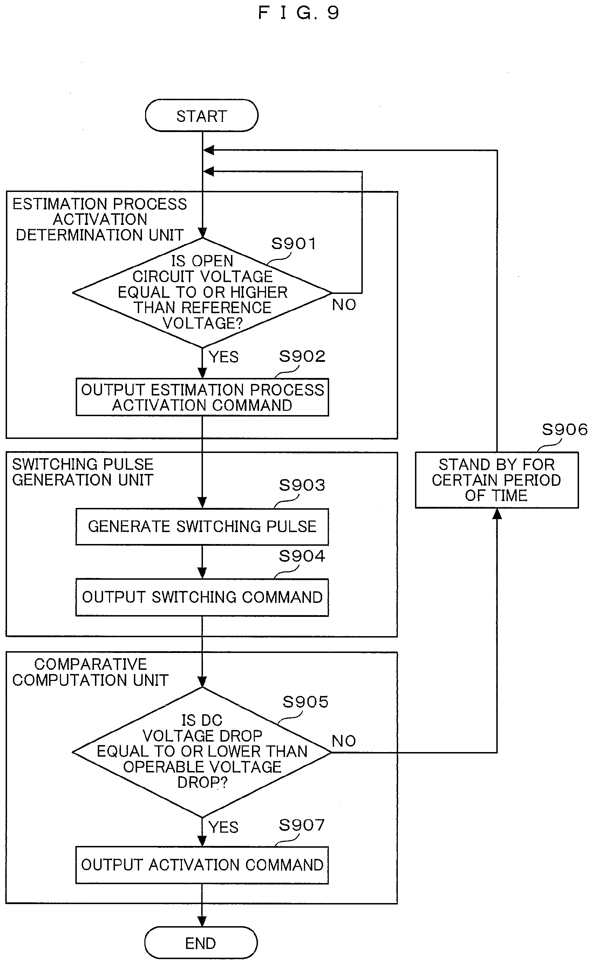

Fig. 9 is a flowchart illustrating a process of the activation determination processing unit 250. A process of the activation determination processing unit 250 will be described with reference to Fig. 9.

The processes performed by the estimation process activation determination unit 151 and the switching pulse generation unit 160 are similar to those of the first embodiment, and they will not be described repeatedly.

The power consumed by the damping resistor 32 is not necessary to exceed the minimum operable power and is set to arbitrary fixed power. According to the second embodiment, the power consumed by the damping resistor 32 is set to be lower than the minimum operable power.

The power consumed by the damping resistor 32 is restricted, for example, by voltage detection accuracy, other estimation methods, or the like.

The comparative computation unit 252 compares the DC voltage drop and the operable voltage drop (S905).

If the DC voltage drop is higher than the operable voltage drop, the output of the switching command stops, and the process stands by for a predetermined period of time (S906). Then, a determination process is performed again from the start of the activation determination processing unit 250. If the DC voltage drop is lower than the operable voltage drop, the generated power of the solar cell 1 exceeds the minimum operable power for the following reasons. Therefore, the comparative computation unit 252 outputs an activation command (S907).

Therefore, since the operation starts after the comparative computation unit 252 outputs the activation command, it is possible to continuously perform the operation without repeatedly activating/inactivating the power conditioner.

Here, a basis of the determination criterion of the comparative computation unit 252 for outputting the activation command will be described.

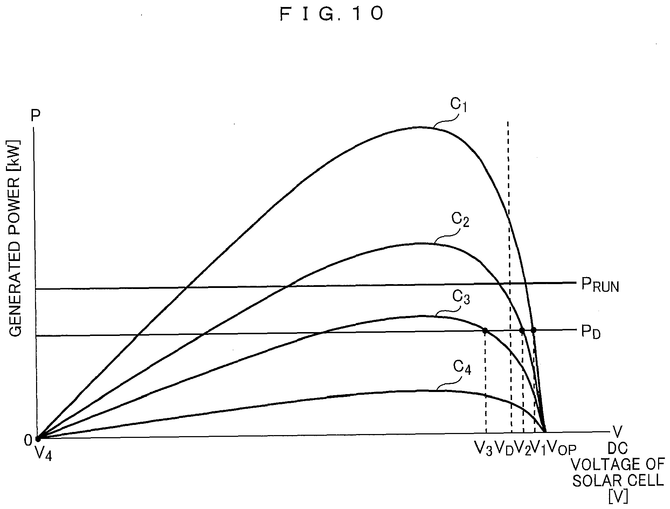

Fig. 10 is an exemplary P-V curve when the power is consumed inside the power conditioner. In Fig. 10, "$V_{OP}$" denotes an open circuit voltage, "$V_D$" denotes an operable voltage drop, "$P_{RUN}$" denotes minimum operable power, and "$P_D$" denotes consumed power for voltage drop.

"$C_1$" is a P-V curve when a maximum point of the power sufficiently exceeds $P_{RUN}$. "$C_2$" is a P-V curve when the maximum point of the power slightly exceeds $P_{RUN}$. "$C_3$" is a P-V curve when the maximum point of the power does not exceed $P_{RUN}$, but exceeds $P_D$. "$C_4$" is a P-V curve when the maximum point of the power does not exceed $P_D$. "$V_1$" denotes a DC voltage when the power $P_D$ is consumed on the curve $C_1$. "$V_2$" denotes a DC voltage when the power $P_D$ is consumed on the curve $C_2$. "$V_3$" denotes a DC voltage when the power $P_D$ is consumed on the curve $C_3$. "$V_4$" denotes a DC voltage (zero point) when the power $P_D$ is consumed on the curve $C_4$.

In Fig. 10, it is recognized that the voltages $V_1$ and $V_2$ when the power $P_D$ is consumed on the curves $C_1$ and $C_2$, respectively, are higher than the voltage $V_D$, and the voltages $V_3$ and $V_4$ when the power $P_D$ is consumed on the curves $C_3$ and $C_4$, respectively, are lower than the voltage $V_D$.

In this regard, it is possible to determine whether or not the solar cell can generate the power exceeding $P_{RUN}$ by comparing the DC voltage drop during consumption of the power $P_D$ with the voltage $V_D$.

Although the damping resistor 32 is employed as an AC-side load by way of example in the second embodiment, a part provided in the power conditioner in advance may be employed as long as it consumes the AC-side power without a limitation. Alternatively, the power may be consumed using the DC-side load instead of the AC-side load.

Third Embodiment

A third embodiment relates to a method of estimating maximum generable power of a solar cell on the basis of consumed power, a DC voltage during consumption of the power, and an open circuit voltage by assuming that power is consumed using an AC load provided in the power conditioner before an interconnected operation.

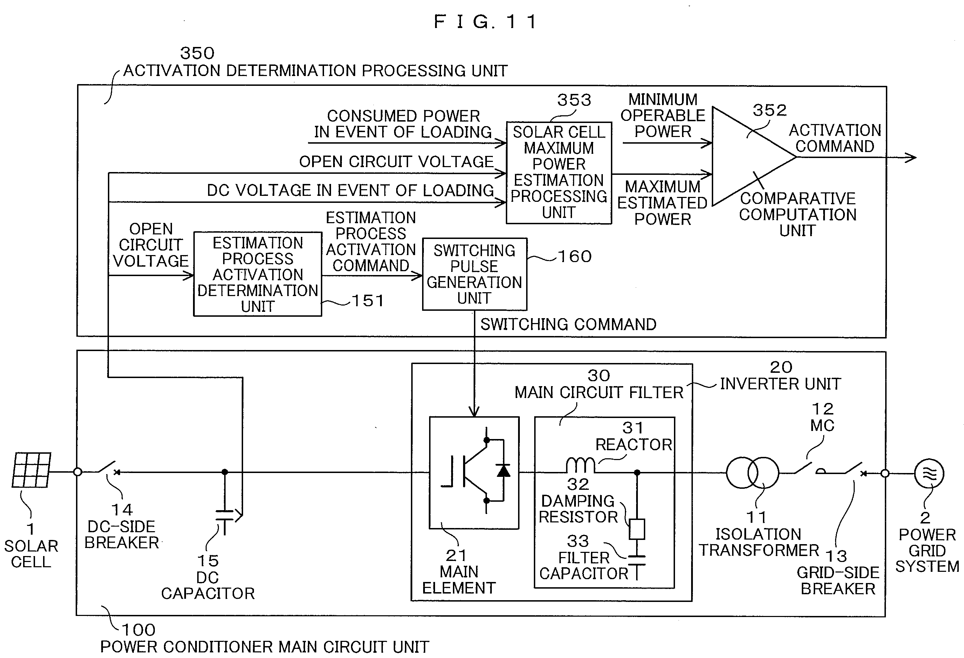

Fig. 11 is an exemplary block diagram illustrating a power conditioner according to the third embodiment. The power conditioner according to the third embodiment has a power conditioner main circuit unit 100 and an activation determination processing unit 350. A solar cell 1 and a power grid system 2 are connected to the power conditioner main circuit unit 100.

The power conditioner main circuit unit 100 includes an isolation transformer 11, an MC 12, a grid-side breaker 13, a DC-side breaker 14, a DC capacitor 15, and an inverter unit 20. The inverter unit 20 has a main element 21 and a main circuit filter 30. The main circuit filter 30 has a reactor 31, a damping resistor 32, and a filter capacitor 33.

The activation determination processing unit 350 has an estimation process activation determination unit 151, a switching pulse generation unit 160, a comparative computation unit 352, and a solar cell maximum power estimation processing unit 353.

The power conditioner of Fig. 11 is different from that of Fig. 1 in that the comparative computation unit 152 is substituted with the comparative computation unit 352, and the solar cell maximum power estimation processing unit 353 is provided in the activation determination processing unit 350. Other parts are similar to those of Fig. 1 as already described above, and they will not be described repeatedly.

The comparative computation unit 352 compares the maximum estimated power output from the solar cell maximum power estimation processing unit 353 and the minimum operable power. If the maximum estimated power is higher than the minimum operable power, an activation command is output.

The solar cell maximum power estimation processing unit 353 calculates and outputs the maximum estimated power (a value obtained by calculating maximum power that can be generated by the solar cell 1) on the basis of consumed power in the event of loading and a DC voltage of the DC capacitor 15 in the event of loading.

The consumed power in the event of loading is power consumed by the damping resistor 32, and the consumed power is set in advance.

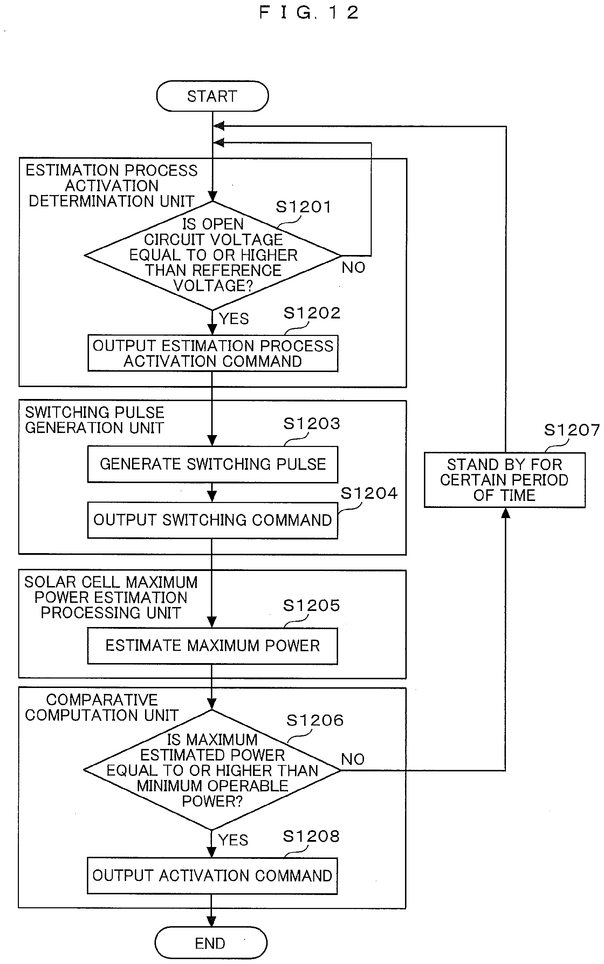

Fig. 12 is an exemplary flowchart illustrating a process of the activation determination processing unit 350. A process of the activation determination processing unit 350 will be described with reference to Fig. 12.

The processes performed by the estimation process activation determination unit 151 and the switching pulse generation unit 160 are similar to those of the first embodiment, and they will not be described repeatedly.

The power consumed by the damping resistor 32 is not necessary to exceed the minimum operable power and is set to arbitrary fixed power. According to the third embodiment, the power consumed by the damping resistor 32 is set to be lower than the minimum operable power.

The solar cell maximum power estimation processing unit 353 estimates maximum power on the basis of the consumed power in the event of loading, an open circuit voltage, and a DC voltage in the event of loading and outputs the maximum power to the comparative computation unit 352 (S1205). A method of estimating the maximum power will be described below.

The comparative computation unit 352 compares the maximum estimated power input from the solar cell maximum power estimation processing unit 353 and the minimum operable power (S1206).

If the maximum estimated power is lower than the minimum operable power, the output of the switching command stops, and the process stands by for a predetermined period time (S1207). Then, the determination process is performed again from the start of the activation determination processing unit 350.

If the maximum estimated power is higher than the minimum operable power, the generated power of the solar cell 1 exceeds the minimum operable power for the following reasons. Therefore, the comparative computation unit 352 outputs the activation command (S1208).

Therefore, it is possible to continuously perform the operation without repeatedly activating/inactivating the power conditioner by starting the operation after the comparative computation unit 352 outputs the activation command.

Here, a method of estimating the maximum power output from the solar cell maximum power estimation processing unit 353 will be described.

Formulas 4 and 5 are operational equations for each solar cell.

[Formula 4]

[Formula 4]

$$I = I_{ph} - I_S \left\{ \exp\left( \frac{q(V + R_S I)}{nkT} \right) - 1 \right\} - \frac{V + R_S I}{R_{sh}}$$

[Formula 5]

[Formula 5]

$$I_S(T_1) = I_S(T_0)\left(\frac{T_1}{T_0}\right)^{\frac{XTI}{N}} \exp\left(\frac{E_g q(T_1 - T_0)}{NkT_1 T_0}\right)$$

In Formulas 4 and 5, "I" denotes a DC current, "V" denotes a DC voltage, "$I_{ph}$" denotes a photovoltaic current, "$R_s$" denotes a series resistance, "$R_{sh}$" denotes a shunt resistance, "$I_s$" denotes a reverse saturation current, "q" denotes an elementary charge amount, "n" denotes a junction constant, "k" denotes a Boltzman constant, "T" denotes a temperature, "$I_s(T_1)$" denotes a reverse saturation current at a temperature of $T_1$, "$I_s(T_0)$" denotes a reverse saturation current at a temperature of $T_0$, "XTI" denotes a saturation current temperature coefficient, "N" denotes an emission constant, and "$E_g$" denotes an energy gap.

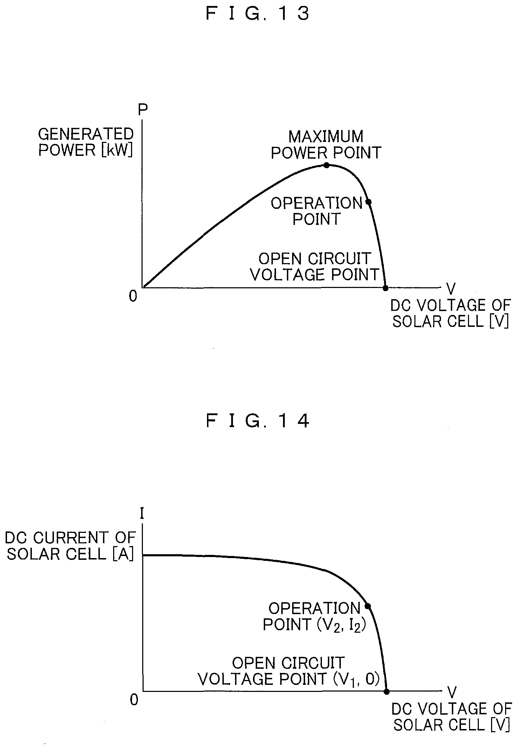

Fig. 13 is an exemplary P-V curve of the solar cell under a certain condition.

Fig. 14 is an exemplary I-V curve of the solar cell under the same condition as that of Fig. 13.

The I-V curve is a curve representing a relationship between the DC current I of the solar cell and the DC voltage V.

When the solar cell has an operation point on the P-V curve of Fig. 13, an operation point on the I-V curve is also obtained as illustrated in Fig. 14. The DC voltage at the operation point on the I-V curve is set to "$V_2$," and the DC current is set to "$I_2$." Similarly, the DC voltage at the open circuit voltage point is set to "$V_1$."

Formulas 6 and 7 are derived by applying the temperature $T_1$, the DC voltage $V_1$ at the open circuit voltage point, the DC voltage $V_2$ at the operation point, and the DC current $I_2$ at the operation point to Formula 4.

[Formula 6]

[Formula 6]

$$0 = I_{ph} - I_S \left\{ \exp\left(\frac{qV_1}{nkT_1}\right) - 1 \right\} - \frac{V_1}{R_{sh}}$$

[Formula 7]

[Formula 7]

$$I_2 = I_{ph} - I_S \left\{ \exp\left(\frac{q(V_2 + R_S I_2)}{nkT_1}\right) - 1 \right\} - \frac{V_2 + R_S I_2}{R_{sh}}$$

By subtracting Formula 7 from Formula 6, Formula 8 is derived. By applying Formula 5 to Formula 8, Formula 9 is derived.

[Formula 8]

[Formula 8]

$$I_2 = I_S \left\{ \exp\left(\frac{qV_1}{nkT_1}\right) - \exp\left(\frac{q(V_2 + R_S I_2)}{nkT_1}\right) \right\} + \frac{V_1 - V_2 - R_S I_2}{R_{sh}}$$

[Formula 9]

[Formula 9]

$$I_2 = I_S(T_0)\left(\frac{T_1}{T_0}\right)^{\frac{XTI}{N}} \exp\left(\frac{E_g q(T_1-T_0)}{NkT_1T_0}\right)\left\{\exp\left(\frac{qV_1}{nkT_1}\right) - \exp\left(\frac{q(V_2+R_S I_2)}{nkT_1}\right)\right\} + \frac{V_1-V_2-R_S I_2}{R_{sh}}$$

In Formula 9, the term $R_s I_2$ and the second term of the right side are neglected because they are insignificant, and Formula 10 is obtained.
[Formula 10]

[Formula 10]

$$I_2 - I_S(T_0)\left(\frac{T_1}{T_0}\right)^{\frac{XTI}{N}} \exp\left(\frac{E_g q(T_1-T_0)}{NkT_1T_0}\right)\left\{\exp\left(\frac{qV_1}{nkT_1}\right) - \exp\left(\frac{qV_2}{nkT_1}\right)\right\} = 0$$

In Fig. 10, since the temperature $T_1$ is only an unknown factor, the temperature $T_1$ is obtained.
Here, by modifying Formula 6 as in Formula 11 and applying the obtained temperature $T_1$, the photovoltaic current $I_{ph}$ is obtained. In this case, the second term of the right side is neglected because it is insignificant.
[Formula 11]

[Formula 11]

$$I_{ph} = I_S\left\{\exp\left(\frac{qV_1}{nkT_1}\right) - 1\right\} + \frac{V_1}{R_{sh}}$$

A relationship "$\partial(VI)/\partial V = 0$" is established at the maximum power point, so that Formula 12 is derived.
In Formula 12, "V" denotes the DC voltage at the maximum power point, and "I" denotes the DC current at the maximum power point.
[Formula 12]

[Formula 12]

$$\frac{\partial I}{\partial V} = -\frac{I}{V}$$

If both sides of Formula 4 are partially differentiated with "V," Formula 13 is obtained. By applying Formula 12 to Formula 13, Formula 14 is derived.
[Formula 13]

[Formula 13]

$$\frac{\partial I}{\partial V} = \frac{-\dfrac{qI_s}{nkT}\exp\left(\dfrac{q(V+R_sI)}{nkT}\right)-\dfrac{1}{R_{sh}}}{\left\{1+\dfrac{qR_sI_s}{nkT}\exp\left(\dfrac{q(V+R_sI)}{nkT}\right)-\dfrac{R_s}{R_{sh}}\right\}}$$

[Formula 14]

[Formula 14]

$$\frac{I}{V} = \frac{\dfrac{qI_s}{nkT}\exp\left(\dfrac{q(V+R_sI)}{nkT}\right)+\dfrac{1}{R_{sh}}}{\left\{1+\dfrac{qR_sI_s}{nkT}\exp\left(\dfrac{q(V+R_sI)}{nkT}\right)-\dfrac{R_s}{R_{sh}}\right\}}$$

In Formula 14, the term $R_sI$ is neglected because it is insignificant, so that Formula 15 is derived.
[Formula 15]

[Formula 15]

$$I = \frac{\dfrac{qI_s}{nkT}\exp\left(\dfrac{qV}{nkT}\right)+\dfrac{1}{R_{sh}}}{\left\{1+\dfrac{qR_sI_s}{nkT}\exp\left(\dfrac{qV}{nkT}\right)-\dfrac{R_s}{R_{sh}}\right\}}V$$

By applying Formula 15 to Formula 4, Formula 16 is obtained. In this case, only "V" is unknown. Therefore, the DC voltage V at the maximum power point is obtained.
[Formula 16]

[Formula 16]

$$\frac{\dfrac{qI_s}{nkT}\exp\left(\dfrac{qV}{nkT}\right)+\dfrac{1}{R_{sh}}}{\left\{1+\dfrac{qR_sI_s}{nkT}\exp\left(\dfrac{qV}{nkT}\right)-\dfrac{R_s}{R_{sh}}\right\}}V = I_{ph}-I_s\left\{\exp\left(\dfrac{qV}{nkT}\right)-1\right\}-\frac{V}{R_{sh}}$$

By applying the obtained DC voltage V at the maximum power point to Formula 15, the DC current I at the maximum power point is obtained, so that it is possible to estimate the maximum power point.

From the aforementioned description, it is possible to estimate the maximum power point by performing computation by setting the point on the P-V curve during power consumption of the damping resistor 32 as an operation point.

Although the method for obtaining the consumed power in the event of loading is not clearly described, it may be measured in advance under the same condition, or may be obtained by measuring the DC voltage in the event of loading and the DC current in the event of loading and multiplying them.

According to the third embodiment, although a current is not detected, the DC current at the operation point can be obtained on the basis of the consumed power in the event of loading and the DC voltage in the event of loading.

Although the damping resistor 32 is employed as an AC-side load by way of example in the third embodiment, a part provided in the power conditioner in advance may be employed as long as it consumes the AC-side power without a limitation. In addition, the power may be consumed using the DC-side load instead of the AC-side load.

According to the embodiments described above, it is possible to determine whether or not the solar cell can generate minimum power necessary in the operation of the power conditioner by using a part provided in the power conditioner in advance without necessity of providing a load circuit used in determination of activation, a circuit switching device, or the like for consuming generated power of the solar cell 1 outside the power conditioner.

It is possible to implement the power conditioner with low cost and high reliability because it is not influenced by an atmospheric condition such as solar radiation intensity or temperature, and any new part is not added.

The embodiments may also be employed in an independent operation as well as the interconnected operation.

The generated power of the power conditioner during the independent operation is similar to the power consumed by an arbitrary load installed by a user. For this reason, in order to output a constant AC voltage during the independent operation, the power conditioner is necessary to generate power exceeding the power consumed by the load. However, since there is no means for checking the power consumed by the installed load, the power conditioner stops at the start of the operation if the generable power of the solar cell is not higher than the power consumed by the load.

In this regard, if a means for allowing a user to input the power of the load is provided, and a condition that the operation starts when the maximum estimated power of the power conditioner is higher than the input power is established, it is possible to determine the operation start.

A means for outputting the maximum estimated power of the power conditioner to a user may also be employed. In this case, a use range can be widened because a user can determine whether or not the operation can be performed and a specific activation condition or an operation condition of the entire system.

Note that the invention is not limited to the embodiments described above, and various modifications may also be possible. For example, while the embodiments have been described in details in order to facilitate understanding of the present invention, they are not limited to a case where all of the components are provided. Any part of the configuration of any one of the embodiments may be substituted with a configuration of the other embodiment, and any configuration of an embodiment may also be added to any configuration of the other embodiment. In addition, any addition, deletion, or substitution of other component may be possible for a part of the configuration of each embodiment.

Each of the aforementioned configurations, functions, processing units, processing means, and the like may be implemented in hardware by designing a part or all of them, for example, by an integrated circuit or the like. In addition, each of the aforementioned configurations, functions, and the like may be implemented in software by interpreting and executing a program that the processor implements each function. Information such as a program, a table, and a file that implements each function can be stored in a memory, a recording device such as a hard disk, a solid state drive (SSD), or a recording medium such as an IC card, an SD card, or a DVD.

Note that control lines and information lines are illustrated only for what is considered to be necessary for explanation, and all of the control lines and information lines are not necessarily shown on the product. In practice, it may be considered that almost all of the configurations are connected to each other.

REFERENCE SIGNS LIST

100    power conditioner main circuit unit
1        solar cell
20      inverter unit
160    switching pulse generation unit
150    activation determination processing unit
152    comparative computation unit
15      DC capacitor
151    estimation process activation determination unit
252    comparative computation unit

352    comparative computation unit
353    solar cell maximum power estimation processing unit

**Claims**

1. A power conditioner comprising:

   a main circuit unit provided with an inverter unit configured to convert DC power from a solar cell into AC power; and
   an activation determination processing unit provided with a switching pulse generation unit configured to transmit a switching command to the inverter unit of the main circuit unit, and a comparison unit configured to compare a DC voltage value during consumption of power in the inverter unit with a predetermined minimum operable voltage value on the basis of the switching command transmitted from the switching pulse generation unit.

2. The power conditioner according to claim 1,
   wherein the main circuit unit has a DC capacitor configured to smoothen the DC voltage of the solar cell, and the activation determination processing unit compares an open circuit voltage of the DC capacitor with a predetermined reference voltage value and determines whether or not the switching command is transmitted from the switching pulse generation unit to the inverter unit on the basis of a result of the comparison.

3. A method for controlling a power conditioner, comprising:

   a process of outputting a switching command generated by a switching pulse generation unit to an inverter unit; and
   a process of comparing a DC voltage value during consumption of power in the inverter unit with a predetermined minimum operable voltage value on the basis of the switching command output in the outputting process.

4. The method according to claim 3, further comprising:
   a process of comparing an open circuit voltage of a DC capacitor with a predetermined reference voltage value and determining whether or not the switching command is transmitted from the switching pulse generation unit to the inverter unit on the basis of a result of the comparison.

5. A power conditioner comprising:

   a main circuit unit provided with a DC capacitor configured smoothen DC power from a solar cell and an inverter unit configured to convert the DC power smoothen by the DC capacitor into AC power;
   an activation determination processing unit provided with a switching pulse generation unit configured to transmit a switching command to the inverter unit of the main circuit unit, and a comparison unit configured to compare a DC voltage value during consumption of power in the inverter unit, an open circuit voltage value of the DC capacitor, and a predetermined operable voltage drop value on the basis of the switching command transmitted from the switching pulse generation unit.

6. The power conditioner according to claim 5, wherein the activation determination processing unit compares an open circuit voltage of the DC capacitor with a predetermined reference voltage value and determines whether or not the switching command is transmitted from the switching pulse generation unit to the inverter unit on the basis of a result of the comparison.

7. A method for controlling a power conditioner, comprising:

   a process of outputting a switching command generated by a switching pulse generation unit to an inverter unit; and
   a process of comparing a DC voltage value during consumption of power in the inverter unit, an open circuit voltage of a DC capacitor, and a predetermined operable voltage drop value on the basis of the switching command output in the outputting process.

8. The method according to claim 7, further comprising:
   a process of comparing the open circuit voltage of the DC capacitor with a predetermined reference voltage value and determining whether or not the switching command is transmitted from the switching pulse generation unit to the inverter unit on the basis of a result of the comparison.

9. A power conditioner comprising:

a main circuit unit provided with an inverter unit configured to convert DC power from a solar cell into AC power; and
an activation determination processing unit provided with a switching pulse generation unit configured to transmit a switching command to the inverter unit of the main circuit unit, and a comparison unit configured to compare a maximum estimated power value based on a DC voltage value during consumption of power in the inverter unit with a predetermined minimum operable power on the basis of the switching command transmitted from the switching pulse generation unit.

10. The power conditioner according to claim 9,
wherein the main circuit unit has a DC capacitor configured to smoothen the DC voltage of the solar cell, and the activation determination processing unit has a solar cell maximum power estimation processing unit configured to calculate the maximum estimated power by comparing the DC voltage value, the open circuit voltage of the DC capacitor, and predetermined consumed power in the event of loading.

11. A method for controlling a power conditioner, comprising:

a process of outputting a switching command generated by a switching pulse generation unit to an inverter unit;
a process of obtaining a maximum estimated power value based on a DC voltage value during consumption of power in the inverter unit on the basis of the switching command output in the outputting process; and
a process of comparing the maximum estimated power value obtained in the process of obtaining the maximum estimated power value with predetermined minimum operable power.

12. The method according to claim 11, further comprising:
a process of calculating the maximum estimated power value by comparing the DC voltage value, an open circuit voltage value of a DC capacitor, and predetermined consumed power in the event of loading.

# F I G. 1

EP 3 349 091 A1

FIG. 2

```
                        ┌─────────────┐
                        │    START    │
                        └──────┬──────┘
                               │
  ESTIMATION PROCESS           │
     ACTIVATION                │
  DETERMINATION UNIT           ▼           S201
              ╱─────────────────────────────╲
             ╱      IS OPEN                   ╲
            ╱   CIRCUIT VOLTAGE                ╲  NO
            ╲  EQUAL TO OR HIGHER             ╱
             ╲  THAN REFERENCE               ╱
              ╲    VOLTAGE?                  ╱
               ╲───────────────────────────╱
                          │ YES      S202
                          ▼
              ┌──────────────────────────────┐
              │  OUTPUT ESTIMATION PROCESS    │
              │     ACTIVATION COMMAND        │
              └──────────────────────────────┘

  SWITCHING PULSE                                    S206
  GENERATION UNIT              S203          ┌──────────────────┐
                          │                  │   STAND BY FOR   │
                          ▼                  │  PREDETERMINED   │
              ┌──────────────────────────┐  │  PERIOD OF TIME  │
              │ GENERATE SWITCHING PULSE  │  └──────────────────┘
              └──────────────────────────┘
                          │        S204
                          ▼
              ┌──────────────────────────┐
              │ OUTPUT SWITCHING COMMAND  │
              └──────────────────────────┘

  COMPARATIVE
  COMPUTATION UNIT           ▼           S205
              ╱─────────────────────────────╲
             ╱       IS                       ╲
            ╱   DC VOLTAGE IN                  ╲  NO
           ╱  EVENT OF LOADING                  ╲
           ╲ EQUAL TO OR HIGHER THAN           ╱
            ╲  MINIMUM OPERABLE               ╱
             ╲    VOLTAGE?                    ╱
              ╲───────────────────────────╱
                          │ YES      S207
                          ▼
              ┌──────────────────────────────┐
              │  OUTPUT ACTIVATION COMMAND    │
              └──────────────────────────────┘
                          │
                          ▼
                   ┌─────────────┐
                   │     END     │
                   └─────────────┘
```

17

# F I G. 3

[WHEN Pмах IS LOWER THAN Pcoм]

[WHEN PMAX IS HIGHER THAN PCOM]

# F I G. 4

# F I G. 5

FIG. 6

160
SWITCHING PULSE GENERATION UNIT

161

$2\pi f$ → $\dfrac{1}{S}$ → $\theta$

$V_d^*$ →
$V_q^*$ →

$\dfrac{dq}{3\phi}$

162

THREE-PHASE
VOLTAGE
COMMAND

PWM PULSE
GENERATION
UNIT

163

6

21
MAIN
ELEMENT

FIG. 7

160
SWITCHING PULSE GENERATION UNIT

P+ → e → 165 PI → $2\pi f$ → 161 $\dfrac{1}{S}$ → $\theta$

+
P

164
POWER
COMPUTATION

$V_d^*$ →
$V_q^*$ →

162 $\dfrac{dq}{3\phi}$

THREE-PHASE
VOLTAGE
COMMAND

PWM PULSE
GENERATION
UNIT

163

6

AC
CURRENT

AC
VOLTAGE

21
MAIN ELEMENT

22
MAIN CIRCUIT FILTER

11
MC

W

23
DAMPING
RESISTOR

12
GRID-SIDE
BREAKER

2
POWER
GRID SYSTEM

# F I G. 8

F I G. 9

```
                            ┌─────────┐
                            │  START  │
                            └────┬────┘
                                 │◄──────────────────────────────┐
                                 │◄──────────────────────┐       │
  ┌──────────────────────────────────────────────────┐  │       │
  │ ESTIMATION PROCESS                                 │  │       │
  │ ACTIVATION                                         │  │       │
  │ DETERMINATION UNIT           S901                  │  │       │
  │              ╱◇╲                                   │  │       │
  │            ╱     ╲    IS OPEN                      │  │       │
  │          ╱  CIRCUIT VOLTAGE ╲                      │  │       │
  │        ╱ EQUAL TO OR HIGHER   ╲   NO              │  │       │
  │          ╲ THAN REFERENCE   ╱─────────────────────┘  │       │
  │            ╲  VOLTAGE?    ╱                           │       │
  │              ╲◇╱                                      │       │
  │               │ YES     S902                          │       │
  │        ┌──────▼───────────────────────┐              │       │
  │        │ OUTPUT ESTIMATION PROCESS     │              │       │
  │        │ ACTIVATION COMMAND            │              │       │
  │        └───────────────────────────────┘             │       │
  └──────────────────────────────────────────────────┘  │       │
                                 │                        │  S906 │
  ┌──────────────────────────────────────────────────┐  │  ┌─────▼──────────┐
  │ SWITCHING PULSE                                    │  │  │ STAND BY FOR   │
  │ GENERATION UNIT              S903                  │  │  │ CERTAIN PERIOD │
  │        ┌──────▼───────────────────────┐            │  │  │ OF TIME        │
  │        │ GENERATE SWITCHING PULSE      │            │  │  └────────▲───────┘
  │        └──────┬───────────────────────┘            │  │           │
  │               │         S904                        │  │           │
  │        ┌──────▼───────────────────────┐            │  │           │
  │        │ OUTPUT SWITCHING COMMAND      │            │  │           │
  │        └───────────────────────────────┘           │  │           │
  └──────────────────────────────────────────────────┘  │           │
                                 │                        │           │
  ┌──────────────────────────────────────────────────┐  │           │
  │ COMPARATIVE                                        │  │           │
  │ COMPUTATION UNIT             S905                  │  │           │
  │              ╱◇╲                                   │  │           │
  │            ╱     ╲    IS DC                        │  │           │
  │          ╱ VOLTAGE DROP    ╲   NO                 │  │           │
  │        ╱ EQUAL TO OR LOWER THAN ╲────────────────────────────────┘
  │          ╲ OPERABLE VOLTAGE  ╱                     │
  │            ╲  DROP?        ╱                        │
  │              ╲◇╱                                    │
  │               │ YES     S907                        │
  │        ┌──────▼───────────────────────┐            │
  │        │ OUTPUT ACTIVATION COMMAND     │            │
  │        └───────────────────────────────┘           │
  └──────────────────────────────────────────────────┘
                                 │
                            ┌────▼────┐
                            │   END   │
                            └─────────┘
```

EP 3 349 091 A1

F I G. 1 O

22

# F I G. 1 1

EP 3 349 091 A1

F I G. 1 2

START

ESTIMATION PROCESS
ACTIVATION
DETERMINATION UNIT

S1201
IS OPEN
CIRCUIT VOLTAGE
EQUAL TO OR HIGHER
THAN REFERENCE
VOLTAGE?

NO

YES    S1202
OUTPUT ESTIMATION PROCESS
ACTIVATION COMMAND

SWITCHING PULSE
GENERATION UNIT

S1203
GENERATE SWITCHING PULSE

S1204
OUTPUT SWITCHING COMMAND

S1207
STAND BY FOR
CERTAIN PERIOD
OF TIME

SOLAR CELL MAXIMUM
POWER ESTIMATION
PROCESSING UNIT

S1205
ESTIMATE MAXIMUM POWER

COMPARATIVE
COMPUTATION UNIT

S1206
IS MAXIMUM
ESTIMATED POWER
EQUAL TO OR HIGHER THAN
MINIMUM OPERABLE
POWER?

NO

YES    S1208
OUTPUT ACTIVATION COMMAND

END

FIG. 13

P
GENERATED POWER [kW]

MAXIMUM POWER POINT

OPERATION POINT

OPEN CIRCUIT VOLTAGE POINT

0

V
DC VOLTAGE OF SOLAR CELL [V]

FIG. 14

I
DC CURRENT OF SOLAR CELL [A]

OPERATION POINT $(V_2, I_2)$

OPEN CIRCUIT VOLTAGE POINT $(V_1, 0)$

0

V
DC VOLTAGE OF SOLAR CELL [V]

25

## INTERNATIONAL SEARCH REPORT

| | International application No. |
|---|---|
| | PCT/JP2016/071666 |

| A. CLASSIFICATION OF SUBJECT MATTER |
|---|
| *G05F1/66*(2006.01)i, *H02M7/48*(2007.01)i |

According to International Patent Classification (IPC) or to both national classification and IPC

| B. FIELDS SEARCHED |
|---|

Minimum documentation searched (classification system followed by classification symbols)
G05F1/66-1/67, H02M7/42-7/98

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2014-180182 A  (Omron Corp.),<br>25 September 2014 (25.09.2014),<br>paragraphs [0010] to [0045]; fig. 1 to 4<br>& EP 2778824 A2<br>paragraphs [0010] to [0045]; fig. 1 to 4 | 1-4<br>5-12 |
| Y<br>A | JP 2009-148014 A  (Meidensha Corp.),<br>02 July 2009 (02.07.2009),<br>paragraphs [0010] to [0015]; fig. 1 to 4<br>(Family: none) | 1-4<br>5-12 |
| A | JP 2013-102631 A  (Panasonic Corp.),<br>23 May 2013 (23.05.2013),<br>paragraphs [0001] to [0032]; fig. 1 to 7<br>(Family: none) | 1-12 |

☒ Further documents are listed in the continuation of Box C.       ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 18 October 2016 (18.10.16) | 01 November 2016 (01.11.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**EP 3 349 091 A1**

**INTERNATIONAL SEARCH REPORT**

International application No.

PCT/JP2016/071666

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2015-204746 A (Fronius International GmbH), 16 November 2015 (16.11.2015), paragraphs [0019] to [0030]; fig. 1 to 6 & US 2015/0295512 A1 paragraphs [0023] to [0035]; fig. 1 to 6 & DE 102014216509 A1 & AT 515725 A1 & CN 105006833 A | 1-4 |
| P,X | JP 2015-208131 A (Mitsubishi Electric Corp.), 19 November 2015 (19.11.2015), paragraphs [0014] to [0035]; fig. 1 to 4 (Family: none) | 9-12 |

Form PCT/ISA/210 (continuation of second sheet) (January 2015)

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012205328 A

- JP 3762036 B